# EUROPÄISCHE PATENTANMELDUNG

(11) **EP 3 267 562 A1**
(43) Veröffentlichungstag der Anmeldung: **10.01.2018**
(21) Anmeldenummer: 16177683.6
(22) Anmeldetag: 04.07.2016
(51) Int. Cl.: H02K 3/24, H02K 3/30, H02K 9/19

(54) **WASSERGEKÜHLTE GENERATORLEISTE MIT KÜHLKANAL-ABSTANDSRAUM**

(71) Anmelder: Siemens Aktiengesellschaft, 80333 München (DE)
(72) Erfinder: Mashkin, Andrey, 50672 Köln (DE); Brockschmidt, Mario, 45131 Essen (DE); Merte, Ralf, 44225 Dortmund (DE); Pohlmann, Friedhelm, 45355 Essen (DE); Lehmann, Christoph, 47506 Neukirchen-Vluyn (DE); Warren, Bobby A., Fort Mill, 29715 (US)

(57) **Zusammenfassung**

Die Erfindung betrifft eine wassergekühlte Generatorleiste mit wenigstens zwei parallel angeordneten Leiterstapeln, die jeweils eine Mehrzahl übereinander angeordneter, voneinander mittels einer Leiterisolation elektrisch isolierter Leiter aufweisen, wobei die Leiter zueinander mittels eines ausgehärteten Harzes geometrisch festgelegt sind, und wobei zwischen den Leiterstapeln ein Abstandsraum vorgesehen ist, in dem wenigstens ein Kühlkanal zur Leitung von Kühlwasser angeordnet ist.

## Beschreibung

Die Erfindung betrifft eine wassergekühlte Generatorleiste mit wenigstens zwei parallel angeordneten Leiterstapeln, eine elektrische Maschine mit einer Mehrzahl solcher Generatorleisten sowie ein Verfahren zur Herstellung von wassergekühlten Generatorleisten.

Eine elektrische Maschine, wie zum Beispiel ein Turbogenerator, weist eine Wicklung von elektrischen Leitern auf. Die elektrischen Leiter sind an ihrem Umfang von einer Leiterisolation umhüllt, um die elektrischen Leiter gegen die Umgebung, gegen ein Blechpaket der elektrischen Maschine und/oder gegen benachbarte Windungen der Wicklung elektrisch zu isolieren.

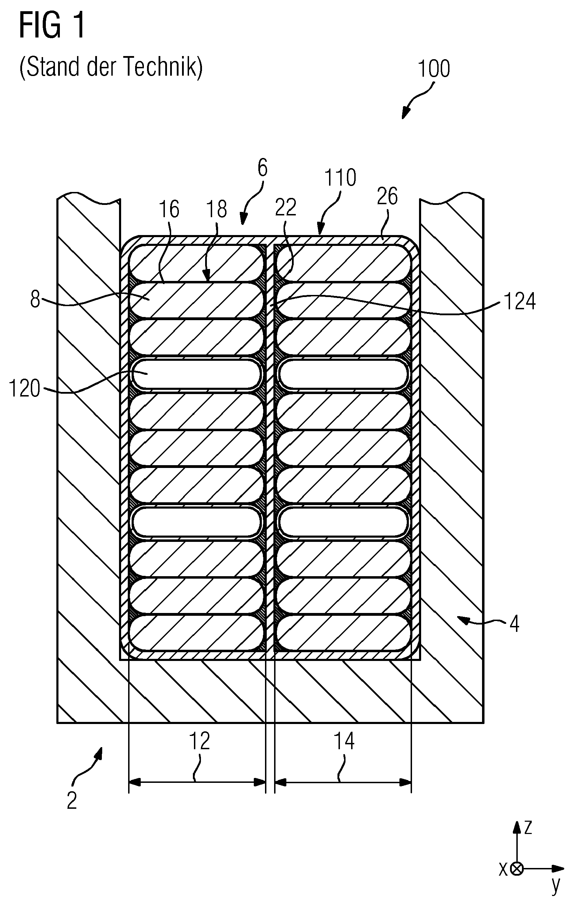

Bei bekannten elektrischen Maschinen 100, beispielsweise gemäß Fig. 1, ist das Blechpaket im Stator 2 als Statorkern 4 ausgebildet, der - auf dem Umfang gleichmäßig verteilt - parallele Ausnehmungen 6 (auch als Nuten bezeichnet) aufweist, in welchen jeweils eine Mehrzahl von in Reihe geschalteten Generatorleisten 110, im Stator gleichbedeutend als Statorleisten bezeichnet, die elektrischen Leiter des Stators beherbergt. Eine gängige Anordnung der Leiter innerhalb der Generatorleisten sieht dabei zwei parallel angeordnete Leiterstapel 12 und 14 mit jeweils mehreren übereinander angeordneten, mittels einer Leiterisolation 16 einzeln isolierten Leiterstangen 8 vor. Diese weisen häufig einen abgerundeten, rechteckigen Querschnitt 18 beispielsweise mit einem Seitenverhältnis von fünf (lange Seite) zu eins (kurze Seite) auf und sind ein Vielfaches länger als die Maße des Querschnitts. Zwischen den in Reihe geschalteten Generatorleisten werden in gängiger Bauweise einzelne Leiterstangen 8 der verschiedenen Leiterstapel transponiert, d.h. die Leiterstangen 8 werden zwischen den Generatorleisten gekröpft und wechseln damit am Übergang zwischen zwei Generatorleisten den Leiterstapel.

Die Leiterstangen 8 sind zueinander ebenso wie die Leiterstapel 12 und 14 mittels eines ausgehärteten Harzes 22 festgelegt, das zwischen die Leiterstapel bei der Montage mittels eines Schwertes 124 eingebracht wurde. Die ganze Generatorleiste ist zumindest an ihrem Umfang mittels einer Hauptisolation 26 gegenüber dem Statorkern 4 elektrisch isoliert.

Durch die Anordnung solcher Generatorleisten 110 im Statorkern ist es notwendig, die durch die Strominduktion eingebrachte Wärme mittels eines Kühlkreislaufes abzuführen. Dies geschieht in herkömmlicher Weise, indem in jedem Leiterstapel 12 und 14 jeder fünfte oder jeder siebte (in Fig. 1 zur einfacheren Darstellung jeder vierte) der übereinander angeordneten Leiter 8 durch einen Kühlkanal 120 zur Führung von Kühlwasser ersetzt ist. Genau wie die Leiter 8 werden auch die Kühlkanäle in gängiger Bauweise transponiert und gekröpft.

In einer typischen bekannten Generatorleiste 110, bei welcher in zwei parallelen Leiterstapeln 12 und 14 beispielsweise jeweils 30 Leiterstangen übereinander angeordnet sind, sind folglich ca. acht bis zwölf Kühlwasserkanäle durch die Generatorleiste zu führen und an Stirnseiten der Generatorleiste jeweils an einen Wasserkreislauf der elektrischen Maschine 100 anzuschließen.

Aufgabe der Erfindung ist die Bereitstellung einer hinsichtlich Aufbau, Fertigung bzw. Montage einfachen wassergekühlten Generatorleiste, insbesondere in Bezug auf die Einbindung des Kühlwasserkreislaufs.

Eine erfindungsgemäße wassergekühlte Generatorleiste weist wenigstens zwei parallel angeordnete Leiterstapel auf, die jeweils eine Mehrzahl übereinander angeordneter, voneinander mittels einer Leiterisolation elektrisch isolierter Leiter aufweisen. Die Generatorleiste ist vorzugsweise von der Bauart, bei welcher die einzelnen isolierten Leiter jedes Leiterstapels zueinander und/oder die Leiterstapel selbst zueinander mittels eines ausgehärteten Harzes, das vorzugsweise die Leiter wenigstens teilweise umgibt, geometrisch (also in ihrer relativen Position zueinander) festgelegt sind. Erfindungsgemäß ist zwischen den Leiterstapeln ein Abstandsraum vorgesehen, in dem wenigstens ein Kühlkanal zur Leitung von Kühlwasser angeordnet ist.

Eine Wärmeabfuhr aus der Generatorleiste findet dabei über den derart zentral bzw. mittig geführten Kühlkanal statt, wobei die beiden Leiterstapel ausreichend weit voneinander beanstandet sind, dass im dazwischen angeordneten Abstandsraum ein Kühlkanal mit ausreichender Flussrate für die benötigte Kühlleistung Platz findet.

Durch die zentrale Führung des Kühlkanals entfällt beim Anschluss einer Generatorleiste, beispielsweise an eine weitere Generatorleiste mit versetzter Leiterführung die Notwendigkeit, den Kühlkanal mittels einer aufwendigen Kröpf-Verbindung, gegebenenfalls ebenso versetzt, anzuschließen. Solche Kröpf-Verbindungen können beispielsweise für die oben zum Stand der Technik beschriebenen Kühlkanäle, die anstatt eines Leiters verbaut sind, nötig sein und erfordern einen teuren Werkstoff, beispielsweise geeignete V2A-Stahllegierungen. Der erfindungsgemäße, zentrale Kühlkanal muss nicht auf diese Weise gekröpft werden. Für seine Außenhülle und/oder gegebenenfalls Schnittstellen können daher andere und günstigere Werkstoffe Verwendung finden.

Zudem benötigt eine erfindungsgemäße Generatorleiste eine geringere Bauhöhe in Stapelhochrichtung, weil nicht mehr beispielsweise jeder fünfte bis siebte Platz im Leiterstapel für einen Kühlkanal benötigt wird und stattdessen mit einer Leiterstange besetzt werden kann. Dadurch kann die benötigte Statornut-Tiefe und/oder der benötigte Statorkern-Durchmesser reduziert werden.

Die Erfindung ist natürlich auch auf Generatorleisten mit drei oder mehr parallel angeordneten Leiterstapeln anwendbar, wobei dann zwischen den jeweils benachbarten Leiterstapeln jeweils ein separater Abstandsraum vorgesehen ist, in welchem ein (im Sinne der Erfindung auch als "zentral" oder "mittig" bezeichneter) Kühlkanal angeordnet ist.

Um die Wärmeübertragung von den Leiterstangen der Leiterstapel hin zum Kühlkanal zu verbessern, weist der Kühlkanal vorzugsweise eine hoch-wärmeleitfähige und wasserabweisende Außenhülle auf, deren Außenseite wenigstens in Teilabschnitten mit den Leitern der Leiterstapel, bzw. insbesondere deren Leiterisolation, in Berührung steht. Unter einer solchen Berührung ist insbesondere ein direkter, flächiger Kontakt zwischen der Außenhülle des Kühlkanals und der Isolation des Leiters zu verstehen. Vorzugsweise weist die Leiterisolation einen Werkstoff auf, der eine gute Wärmeleitfähigkeit aufweist.

Das Material der Außenhülle des Kühlkanals weist insbesondere einen faserverstärkten und/oder abriebfesten Polymerwerkstoff und/oder einen nicht-magnetischen, metallischen Werkstoff auf. Beispielsweise kommen folgende Werkstoffe in Betracht: Glasfaser verstärkte Polymere, Carbonfaser verstärkte Polymere, Teflon, Aramid, Kevlar, Modflon, Polyimide, Nomex, rostfreie Stähle wie beispielsweise V2A-Stahl, und/oder Aluminium.

In einer anderen bevorzugten Ausführung weist die Außenhülle des Kühlkanals einen ferromagnetischen Werkstoff und eine elektrische Isolierschicht auf. Dies ermöglicht bei geeigneter geometrischer Ausgestaltung eine gezielte, direkte Beeinflussung der Magnetfelder in der elektrischen Maschine, was in bestimmten Anwendungsfällen gewünscht sein kann. Der ferromagnetische Werkstoff kann dazu gegebenenfalls auch nur bereichsweise und/oder in unterschiedlichen Gewichtsanteilen eingesetzt werden.

Vorzugsweise erstreckt sich der Kühlkanal im Wesentlichen entlang der gesamten Stapelhöhe der Leiterstapel, um eine homogene und ausreichende Wärmeabfuhr zu unterstützen.

Ab einer bestimmten Stapelhöhe der Leiterstapel kann es zum Erreichen eines homogenen Flusses von Kühlwasser sinnvoll sein, den Kühlkanal wenigstens bereichsweise zu unterteilen, um eine homogene Wärmeabfuhr zu unterstützen. Vorzugsweise ist dazu im Kühlkanal wenigstens eine, insbesondere quer zur Stapelhochrichtung verlaufende, Trennbande (im Sinne einer Brücke von einer Außenwand zur anderen Außenwand) zur Lenkung eines Flusses von Kühlwasser im Kühlkanal vorgesehen.

Eine andere bevorzugte Möglichkeit zur Unterstützung einer homogenen Wärmeabfuhr kann ein, vorzugsweise stapelweiser, Einbau mehrerer, übereinander verlaufender Kühlkanäle im Abstandsraum sein. Dabei weist die Generatorleiste vorzugsweise mehrere Kühlkanäle auf, die derart angeordnet sind, dass im Wesentlichen entlang der gesamten Stapelhöhe der Leiterstapel wenigstens einer der Kühlkanäle angeordnet ist.

Um den Platzbedarf - bezogen auf die erreichbare Stärke des magnetischen Feldes - weiter zu minimieren, weisen die Leiter der Leiterstapel einen Rechteck-Querschnitt mit einer kurzen und einer langen Rechteck-Seite auf und stehen mit der Außenhülle eines Kühlkanals an ihrer kurzen Seite in Berührung. Dieser Rechteck-Querschnitt ist häufig mit abgerundeten oder abgefasten Eckkanten ausgeführt, weil dies sowohl die Isolation der einzelnen Leiter erleichtert, als auch günstiger zu fertigen ist.

Auf dieser abgerundeten oder abgefasten Ausbildung des Leiterquerschnitts beruht eine bevorzugte Weiterbildung der Erfindung, bei welcher der Wärmeabtransport von den einzelnen Leitern weiter verbessert werden kann. Gemäß dieser Weiterbildung ist zwischen der Außenseite des Kühlkanals und jeweils zwei benachbarten Leitern eines der Leiterstapel ein Zwischenraum angeordnet, der insbesondere durch die ebene Außenseite des Kühlkanals und die an ihren langen Seiten aneinander anliegenden, zur kurzen Seite hin abgerundeten oder abgefasten Leiterstangen abgegrenzt ist. Gemäß dieser Weiterbildung ist dieser Zwischenraum wenigstens teilweise, besonders bevorzugt vollständig, mit einem hoch-wärmeleitfähigen Füllstoff gefüllt.

Dies verbessert die Wärmeabfuhr auch bei Anordnung des Kühlkanals an der kurzen Seite des Rechteck-Querschnitts bei gleichzeitig abgerundeten Querschnitts-Ecken. Dass in diesem Fall nur etwa beispielsweise 60 % der Längserstreckung der kurzen Seite mit der Außenseite des Kühlkanals in direkte Berührung kommen, wird durch die "indirekte" Wärmeübertragung über den Füllstoff kompensiert, der in den Zwischenräumen angeordnet ist.

Um eine hohe Wärmeleitfähigkeit des verwendeten Füllstoffs sicherzustellen, weist dieser ein wärmeaushärtendes Harz auf, beispielsweise ein Epoxydharz, das gegebenenfalls dem zur geometrischen Festlegung der Leiter verwendeten Harz entsprechen kann. Im vorliegend betrachteten Füllstoff sind diesem Harz planare und/oder kugelige Partikel mit einem Aluminiumoxid-Werkstoff, einem Boron-Nitrid-Werkstoff und/oder einem anderen festen Werkstoff mit einer Wärmeleitfähigkeit von mehr als 30 W/mK beigemischt und vorzugsweise im Wesentlichen gleichmäßig in diesem Harz verteilt.

Vorzugsweise weist die Generatorleiste zwei Stirnseiten auf. Um die Anbindung der Generatorleiste an einen Kühlwasserkreislauf der elektrischen Maschinen möglichst einfach zu gestalten, ist an diesen Stirnseiten der Kühlkanal jeweils mittels einer einzigen Kühlwasser-Schnittstelle mit dem Kühlwasserkreislauf verbindbar.

Eine erfindungsgemäße elektrische Maschine weist eine Rotoranordnung und eine Statoranordnung auf, die eine Mehrzahl von Leitergruppen mit jeweils einer Mehrzahl in Reihe geschaltet Generatorleisten im Sinne der Erfindung aufweist. Durch die Verwendung solcher Generatorleisten kann beispielsweise eine einfache Gestaltung der Wasserkreisläufe der elektrischen Maschine erreicht werden.

Vorzugsweise weist die elektrische Maschine dazu ein Kühlwasserkreislauf auf, der alle Generatorleisten einer Leitergruppe mit Kühlwasser versorgt. Unter einer Leitergruppe kann insbesondere die Anordnung aller, in einer Ausnehmung des Statorkerns angeordneter Generatorleisten verstanden werden.

Ein erfindungsgemäßes Verfahren zur Herstellung einer wassergekühlten Generatorleiste bezieht sich insbesondere auf Generatorleisten im Sinne der Erfindung, aber auch auf andere Generatorleiten. Das Verfahren weist die Schritte auf, einen Kühlkanal auf einer Außenseite mit einem hoch-wärmeleitfähigen Füllstoff zu beschichten, zwei Leiterstapel bereitzustellen, die Leiterstapel und den beschichteten Kühlkanal zueinander so zu positionieren, dass Kontakt zwischen den Leiterisolationen der einzelnen Leiter der Leiterstapel und dem Füllstoff besteht, und die derart positionierte Anordnung aus Leiterstapeln und Kühlkanal durch Erhitzen und/oder Druckbeaufschlagen auszuhärten.

Eine Vorbeschichtung des Kühlkanals mit dem Füllstoff macht die Verwendung eines sogenannten "Schwertes", an dem bei herkömmlichen Generatoren das Harz zwischen zwei parallel angeordnete Leiterstapel eingeführt wird, überflüssig, weil der Kühlkanal gleichsam als dieses "Schwert" eingesetzt wird. Die herkömmlichen Fertigungsschritte "Montieren der Kühlkanäle" und "Montieren der Trennung der Leiterstapel (harzgefülltes an Schwert)" können auf diese Weise zusammengefasst werden, was die Fertigung deutlich vereinfacht.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei zeigt:
- Fig. 1: in einer Schnittansicht eine bekannte Generatorleiste mit einer Mehrzahl von Kühlkanälen;
- Fig. 2: in einer Schnittansicht eine Generatorleiste nach einer Ausführung der Erfindung mit einem zentralen Kühlkanal; und
- Fig. 3: in einer Draufsicht die Generatorleiste nach Fig. 2 mit einem Kühlwasser-Anschluss.

In Fig. 1 ist die in der Beschreibungseinleitung dargestellte, bekannte Generatorleiste 110 in ihrer Einbauumgebung, einem Ausschnitt einer bekannten elektrischen Maschine 100, dargestellt. Diese Generatorleiste 110 ist umständlich zu fertigen und hat aufgrund der Anordnung der Kühlkanäle 120 innerhalb der Leiterstapel 12 und 14 einen hohen Platzbedarf in Stapelhochrichtung Z.

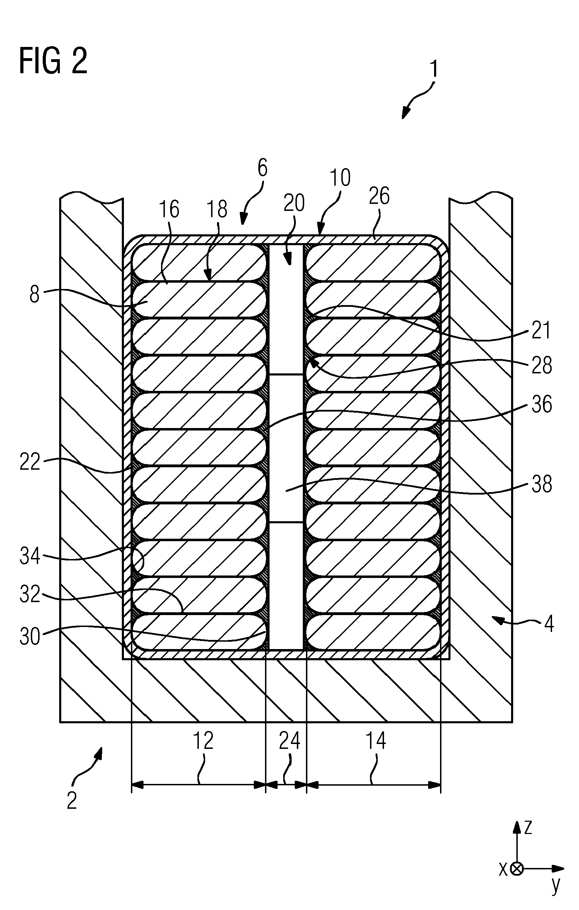

In Fig. 2 ist ein Ausschnitt einer elektrischen Maschine 1, hier eines Turbogenerators, mit einer wassergekühlten Generatorleiste 10 mit einem einzigen, zentralen Kühlkanal 20 gemäß einer Ausführung der Erfindung dargestellt.

Die dargestellte Generatorleiste 10 weist wenigstens zwei parallel angeordnete Leiterstapel 12 und 14 auf, deren Leiter, hier Leiterstangen 8, mittels einer Leiterisolation 16, die an einem Umfang 18 der Leiterstange 8 (an jeder separat) angeordnet ist, elektrisch voneinander getrennt sind. Die Leiterstangen 8 sind zueinander mittels eines ausgehärteten Harzes 22 und mittels eines ausgehärteten, hoch-wärmeleitfähigen Füllstoffes 28 geometrisch festgelegt. Zwischen den Leiterstapeln 12 und 14 ist ein Abstandsraum 24 vorgesehen, in dem ein einzelner Kühlkanal 20 angeordnet ist, der sich - bezüglich der Stapelhochrichtung Z - entlang der gesamten Erstreckung der Leiterstapel 12 und 14 erstreckt.

Eine Außenseite einer Außenhülle 21 des Kühlkanals 20 steht in Berührung mit der ihr zugewandten, kurze Seite 30 jeder der Leiterstangen 8, soweit dieser direkte Kontakt nicht wegen der abgerundeten Ausbildung (Abrundungen 34) des ansonsten rechteckigen Querschnitts der Leiterstangen 8 unmöglich ist.

Zwischen dem Kühlkanal 20 und jeweils zwei benachbarten Leiterplatten 8 ist aufgrund der Abrundungen 34 jeweils ein Zwischenraum 36 ausgebildet, in welchem in diesem Ausführungsbeispiel ein hoch-wärmeleitfähigkeit Füllstoff 28 mit einem ausgehärteten Harz und darin verteilt angeordneten Wärmeleit-Partikeln angeordnet ist.

Durch die Verwendung dieses Füllstoffs 28 ist trotz der Abrundungen 34 an den im Verhältnis zu den langen Seiten 32 kürzer ausgebildeten kurzen Seiten 30 der Leiterstangen 8 für einen ausreichenden Wärmetransport von den Leiterstangen hin zum Kühlkanal 20 und damit dem Kühlwasser gesorgt.

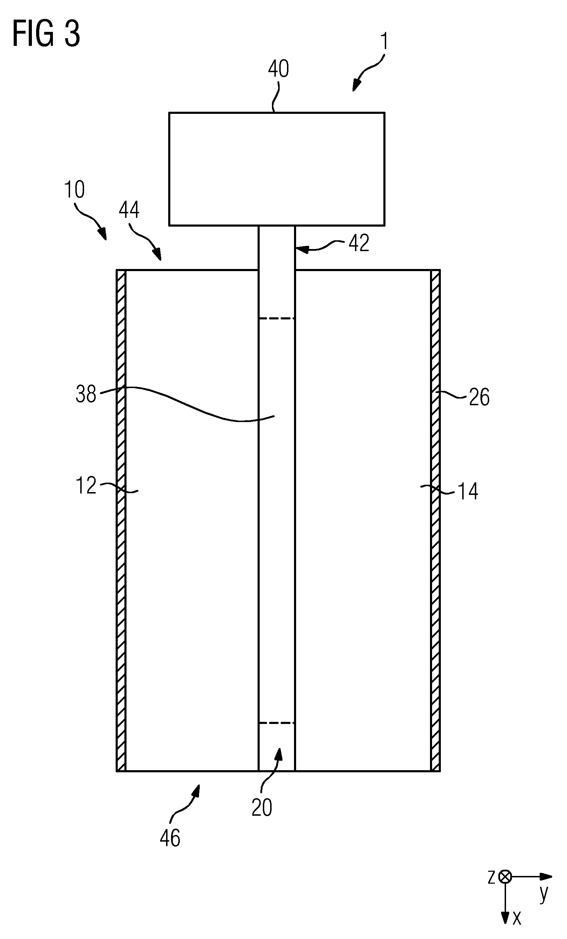

Um einen homogenen Kühlwasser-Fluss und insbesondere eine homogene Wärmeaufnahme über die gesamte Stapelhöhe zu gewährleisten, sind zudem im Kühlkanal zwei, auch als Brücken bezeichnete, Trennbanden 38 vorgesehen, die sich (wie aus Fig. 3 ersichtlich) im Ausführungsbeispiel im Wesentlichen entlang der gesamten Längserstreckung X der Generatorleiste 10 erstrecken.

Bei der Fertigung der Generatorleiste 10 gemäß diesem Ausführungsbeispiel können die herkömmlichen Fertigungsschritte "Montieren der Kühlkanäle" und "Montieren der Trennung der Leiterstapel (Harz an Schwert)" zusammengefasst werden, indem der Kühlkanal 20 zur Montage mit dem Füllstoff 28 beschichtet wird, sodass dieser nach Montage mit den Leiterstapeln 12, 14 und vor dem Aushärten in die Zwischenräume 36 eindringen kann.

In Fig. 3 ist in einer Draufsicht das Ausführungsbeispiel gemäß Fig. 2 dargestellt, wobei ersichtlich wird, dass sich der Kühlkanal 20 entlang der gesamten Längserstreckung X der Generatorleiste 10 erstreckt. Zudem ist an einer ersten Stirnseite 44 der Generatorleiste 10 eine einzige Kühlwasser-Schnittstelle 42 zu einem schematisch dargestellten Kühlwasserkreislauf 40 dargestellt, die deutlich einfacher ausgestaltet werden kann als die vielfachen Schnittstellen, die bei nicht zentral angeordneten Kühlkanälen, beispielsweise gemäß Fig. 1, notwendig sind.

In Fig. 3 ist, insbesondere an einer zweiten Stirnseite 46, keine Leiter-Schnittstelle und keine Kühlkanal-Schnittstelle zu weiteren in positiver X-Richtung gegebenenfalls angeordneten Generatorleisten dargestellt. Zumindest solche Kühlkanal-Schnittstellen können jedoch ebenfalls deutlich einfacher ausgeführt werden als gemäß dem Stand der Technik; beispielsweise analog der in Fig. 3 dargestellten Kühlwasser-Schnittstelle 42.

## Patentansprüche

1. Wassergekühlte Generatorleiste (10) mit wenigstens zwei parallel angeordneten Leiterstapeln (12, 14), die jeweils eine Mehrzahl übereinander angeordneter, voneinander mittels einer Leiterisolation (16) elektrisch isolierter Leiter (8) aufweisen, wobei
die Leiter zueinander mittels eines ausgehärteten Harzes (22) geometrisch festgelegt sind, und wobei zwischen den Leiterstapeln ein Abstandsraum (24) vorgesehen ist, in dem wenigstens ein Kühlkanal (20) zur Leitung von Kühlwasser angeordnet ist.

2. Generatorleiste gemäß Anspruch 1,
wobei der Kühlkanal eine hoch-wärmeleitfähige Außenhülle (21) aufweist, deren Außenseite wenigstens in Teilabschnitten in Berührung mit der Leiterisolation von Leitern der Leiterstapel steht.

3. Generatorleiste gemäß Anspruch 2,
wobei das Material der Außenhülle des Kühlkanals einen, insbesondere faserverstärkten und/oder abriebfesten, Polymerwerkstoff und/oder einen nicht-magnetischen metallischen Werkstoff aufweist.

4. Generatorleiste gemäß Anspruch 2 oder 3,
wobei die Außenhülle des Kühlkanals zumindest bereichsweise einen ferromagnetischen Werkstoff und eine elektrische Isolierschicht aufweist.

5. Generatorleiste gemäß einem der vorherigen Ansprüche,
wobei sich der Kühlkanal im Wesentlichen entlang der gesamten Stapelhöhe (Z) der Leiterstapel erstreckt.

6. Generatorleiste gemäß einem der vorherigen Ansprüche,
wobei im Kühlkanal wenigstens eine, insbesondere quer zur Stapelhochrichtung verlaufende, Trennbande (38) zur Lenkung eines Flusses von Kühlwasser im Kühlkanal vorgesehen ist.

7. Generatorleiste gemäß einem der Ansprüche 1 bis 4,
aufweisend mehrere Kühlkanäle, die derart angeordnet sind, dass im Wesentlichen entlang der gesamten Stapelhöhe der Leiterstapel wenigstens einer der Kühlkanäle angeordnet ist.

8. Generatorleiste gemäß einem der vorherigen Ansprüche,
wobei die Leiter der Leiterstapel einen abgerundeten oder abgefasten Rechtecks-Querschnitt mit einer kurzen Seite (30) und einer langen Seite (32) aufweisen und mit der Außenhülle eines Kühlkanals an ihrer kurzen Seite in Berührung stehen.

9. Generatorleiste gemäß einem der vorherigen Ansprüche,
wobei zwischen der Außenseite des Kühlkanals und jeweils zwei benachbarten Leitern eines der Leiterstapel ein Zwischenraum (36) angeordnet ist, der wenigstens teilweise mit einem hoch-wärmeleitfähigen Füllstoff (28) gefüllt ist.

10. Generatorleiste gemäß Anspruch 9,
wobei der hoch-wärmeleitfähige Füllstoff ein wärmeaushärtendes Harz (22) aufweist, in welchem planare und/oder kugelige Partikel mit einem Aluminiumoxid-Werkstoff, einem Boron-Nitrid-Werkstoff und/oder einem anderen festen Werkstoff mit einer Wärmeleitfähigkeit von mehr als 30 W/mK, insbesondere im Wesentlichen gleichmäßig verteilt, angeordnet sind.

11. Generatorleiste gemäß einem der vorherigen Ansprüche,
aufweisend zwei Stirnseiten (44, 46), an welchen der Kühlkanal jeweils mittels einer einzigen Kühlwasser-Schnittstelle (42) mit einem Kühlwasserkreislauf (40) und/oder mit einem anderen Kühlkanal dieser oder einer weiteren Generatorleiste verbindbar ist.

12. Elektrische Maschine (1) mit einer Rotoranordnung und einer Statoranordnung,
die eine Mehrzahl von Leitergruppen mit jeweils einer Mehrzahl in Reihe geschalteter Generatorleisten (10) gemäß einem der vorherigen Ansprüche aufweist.

13. Elektrische Maschine gemäß Anspruch 12,
aufweisend einen Kühlwasserkreislauf (40), der alle oder zumindest einige Generatorleisten (10) einer Leitergruppe mit Kühlwasser versorgt.

14. Verfahren zur Herstellung einer wassergekühlten Generatorleiste (10),
insbesondere gemäß einem der vorherigen Ansprüche, mit den Schritten:
- einen Kühlkanal (20) auf einer Außenseite (21) mit einem hoch-wärmeleitfähigen Füllstoff (28) beschichten;
- zwei Leiterstapel (12, 14) bereitstellen;
- die Leiterstapel und den beschichteten Kühlkanal zueinander so positionieren, dass Kontakt zwischen den Leiterisolationen (16) der einzelnen Leiter der Leiterstapel und dem Füllstoff besteht;
- die derart positionierte Anordnung aus Leiterstapeln und Kühlkanal durch Erhitzen und/oder Druckbeaufschlagen aushärten.
